# EUROPEAN PATENT APPLICATION

(11) **EP 4 531 211 A1**
(43) Date of publication of application: **02.04.2025**
(21) Application number: 23199580.4
(22) Date of filing: 26.09.2023
(51) Int. Cl.: H01R 13/52, H02G 3/08, H01R 4/34, H01R 4/70, H01R 11/12, H02G 5/00

(54) **TERMINAL SCURRING**

(71) Applicant: MAHLE International GmbH, 70376 Stuttgart (DE)
(72) Inventor: Stolfa, Danijel, 5250 Solkan (SI); Cimzar, Blaz, 4205 Preddvor (SI)

(57) **Abstract**

Terminal housing (1) for housing a power terminal (2) and a cable shoe (3) connected to the power terminal (2). The terminal housing (1) has a clamp section (4) having a clamp section wall (37) which delimits a clamp volume (6) for housing the power terminal (2) and the cable shoe (3). The clamp section (4) comprises a screw opening (12) which is open in the axial direction (5). A cover (14) removably covers the screw opening (12), wherein the cover (14) is attached to the clamp section (4) via at least one snap fit connection (20). The snap fit connection (20) being provided by at least one resilient cantilever arm (22).

## Description

### TECHNICAL FIELD

The invention relates to a terminal housing for housing an electric power terminal and a cable shoe. The invention further relates to a motor controller system, which comprises a power terminal, a cable with a cable shoe and such a terminal housing.

### BACKGROUND ART

A known prior art terminal housing is disclosed in EP3940907A1. This discloses a terminal housing, which comprises a terminal opening for the insertion of the power terminal, and further comprises an outer opening for the insertion of the cable shoe. The housing has a screw opening for the insertion of a screw, wherein the terminal housing further comprises corresponding receptacles for receiving a sealing element for the outer opening and the screw opening. The terminal housing further comprises a cover, which removably covers the screw opening. The cover is attached to the clamp section by a form fit connection.

### SUMMARY

The terminal housing according to the invention as defined in claim 1 has its object to provide an improved or alternative terminal housing whereby the cover of the terminal housing can be removed and refitted multiple times with a reduced risk of damage to the cover resulting in inadequate sealing of the terminal contact from the environment.

This object is achieved according to a first aspect of the invention with a terminal housing for housing a power terminal and a cable shoe connected to the power terminal. The terminal housing has a clamp section, which runs in an axial direction and a circumferential direction and comprises a clamp section wall which delimits a clamp volume for housing the power terminal and the cable shoe, and a cable section for the insertion of a cable connected to the cable shoe. The cable section projects from the clamp section in a direction transverse or inclined to the axial direction and delimits a cable volume. The cable section comprises an inner opening, for the insertion of the cable shoe into the clamp volume, and an outer opening opposing the inner opening, for the insertion of the cable into the cable section. The clamp section comprises a screw opening spaced from the cable section and open in the axial direction, for the insertion of a screw into the clamp volume, and a cover, which removably covers the screw opening. The clamp section further comprises a terminal opening opposing the screw opening, for the insertion of the power terminal into the clamp volume. The terminal housing comprises a cover sealing receptacle, for receiving a cover sealing element for sealing the clamp volume to the outside, the cover sealing receptacle is delimited by the clamp section and the cover. The cover is attached to the clamp section via at least one snap fit connection, which is provided by at least one resilient cantilever arm which extends from the cover, and comprises a protrusion at its free end, which extends into a complementary recess or opening provided on the clamp section or on the cable section. Alternatively the snap fit connection can be provided by at least one resilient cantilever arm which extends from the clamp section or on the cable section and extends into a complementary recess or opening provided on the cover.

By using a snap fit connection, the connection of the cover to the clamp section is not achieved solely by a form fit connection. Indeed the cover can be also attached to the clamp section without a form fit connection. It is only important that there is sufficient sealing between the cover and the clamp section. By having a snap fit connection the cover can be attached to the clamp section by pressing in the axial direction, and can be removed for example by using a tool to disengage the snap fit. Due to the use of at least one resilient cantilever arm for the snap fit connection the cover can be opened and closed multiple times reducing the risk of damaging the cover.

The recess or opening is preferably arranged spaced from the clamp section wall, so that the disengagement of the snap fit connection can be achieved without damaging the critical sealing part of the cover, so that a secure attachment of the cover is achieved whilst enabling repeated attaching and removing of the cover.

The directions indicated herein refer in particular to the axial direction, which can correspond to the projection direction of the power terminal. The radial direction, or the term "radial", thus means transverse to the axial direction. The circumferential direction runs about the axial direction.

The cover preferably comprises a first projection which extends away from the clamp section transversely or inclined to the axial direction, wherein the at least one resilient cantilever arm is connected at one end to the first projection and extending perpendicular therefrom in the axial direction and comprises the protrusion at its free end, which extends into a complementary recess or opening provided on the clamp section or on the cable section. The resilient cantilever arms deform elastically when the snap fit engages or is disengaged. The snap fit connection is thus located away from the sealing area of the cover such that damage to the sealing area is avoided.

Two such resilient cantilever arms can be provided, in this case the protrusions at the free ends of the cantilever arms can be facing each other and each extending into a respective complementary recess or opening provided on the clamp section or on the cable section. In this arrangement the resilient arms must be pushed apart using a tool to disengage the snap fit, thus making the attachment more secure preventing inadvertent removal of the cover.

The cover can further comprise at least one reinforcing rib extending along a surface of the first projection opposing the cantilever arms. The rib reinforces the cover further reducing risk of damage during removal of the cover.

The protrusions can have a first stop surface which extends in a plane extending perpendicularly to the axial direction and engages with an opposing parallel stop surface of the recess or opening. With this arrangement of stop surface it necessary to apply a lateral force to the cantilever arms to disengage the snap fit before moving the cover axially away from the clamp section.

A second projection can be provided on the cover which extends away from the clamp section transversely or inclined to the axial direction. The second projection is preferably arranged on an opposite side of the cover to the first projection, wherein the second projection extends into a complementary opening or recess provided on the clamp section. The second projection aids locating the cover into the clamp section, and provides a more secure attachment of the cover.

The second projection can be snap-fitted in the complementary opening or recess provided on the clamp section.

The terminal housing can further comprise a cable sealing receptacle within the cable volume, for receiving a cable sealing element for sealing the cable volume to the outside, the cable sealing receptacle is delimited by the cable section and arranged in the region of the outer opening.

The terminal housing can further comprise a terminal sealing receptacle arranged in the region of the terminal opening for receiving a terminal sealing element for sealing the clamp volume to the outside. The terminal sealing receptacle can be delimited by a groove that is open on the side averted from the clamp volume.

In a preferred embodiment the cover comprises a section extending into the clamp volume, the section having a groove which delimits the sealing receptacle for receiving a cover sealing element. The section can be in the form of a collar, preferably a cylindrical collar.

A motor controller can be provided with a terminal housing according to one of the above embodiments of the invention described above. The motor controller comprises an axially projecting power terminal, wherein the power terminal projects axially into the clamp section of the terminal housing through the terminal opening. A cable with a cable shoe extends into the terminal housing through the outer opening, such that the cable shoe is arranged in the clamp volume on the side of the power terminal facing the screw opening, and a screw extends through the cable shoe into the power terminal, such that the cable shoe is clamped between the screw and the power terminal.

### BRIEF DESCRIPTION OF THE DRAWINGS

Embodiments will now be described by way of example only with reference to the accompanying drawings, in which:
Figure 1 is a perspective view of a terminal housing according to the invention.
Figure 2 is a cross section view of a terminal housing according to figure 1
Figure 3 is an exploded view of a terminal housing according to the invention.
Figure 4 is a cross section view taken through the line A-A in figure 2.
Figure 5 is a perspective view of a motor controller according to the invention.

### DETAILED DESCRIPTION

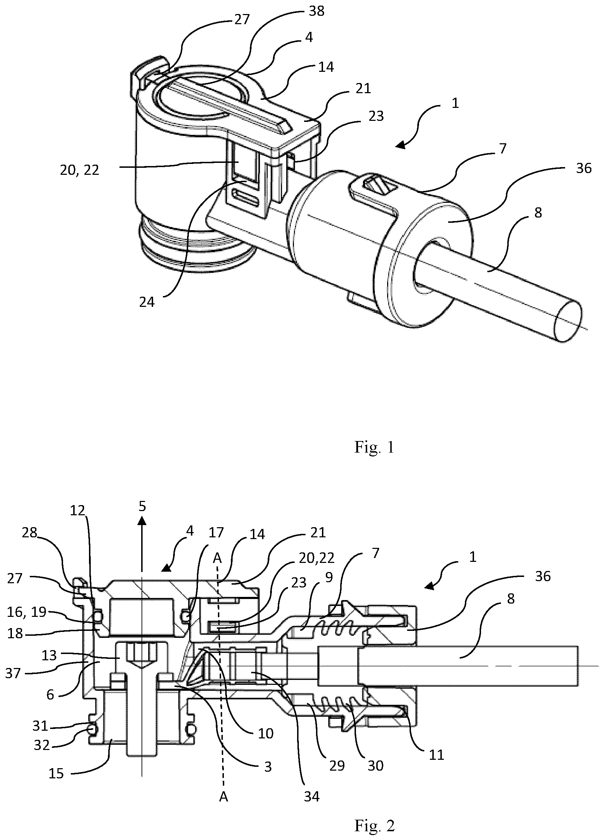

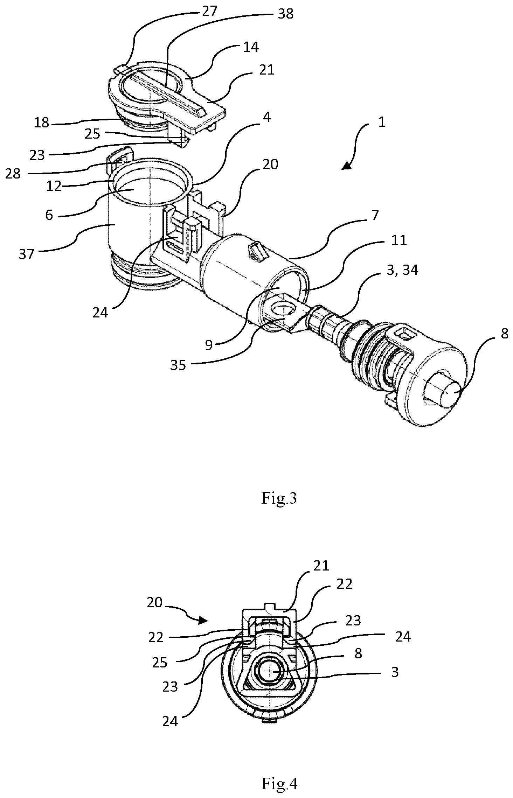

Referring to the figures 1 to 5, a terminal housing 1 is provided for housing a power terminal 2 together with a cable shoe 3. The terminal housing 1 has a clamp section 4 which runs in an axial direction 5 and a circumferential direction and comprises a clamp section wall 37 which delimits a clamp volume 6 for housing the power terminal 2 and the cable shoe 3. The terminal housing 1 has a cable section 7 for the insertion of a cable 8 connected to the cable shoe 3. As can be seen in figure 2, the cable section 7 projects from the clamp section 4 in a direction transverse to the axial direction and delimits a cable volume 9. The cable section 7 comprises an inner opening 10 for the insertion of the cable shoe 3 into the clamp volume 9. The cable section 7 also comprises an outer opening 11 opposing the inner opening 10, for the insertion of the cable 8 into the cable section 7.

The clamp section 4 comprises a screw opening 12 spaced from the cable section 7 and open in the axial direction 5. A screw 13 can be inserted through the opening 12 into clamp volume 6. The cable 8 with a cable shoe 3 extends into the terminal housing 1 through the outer opening 11, such that the cable shoe 3 is arranged in the clamp volume 6 on the side of the power terminal 2 facing the screw opening 12. The screw 13 extends through the cable shoe 3 into the power terminal 2, such that the cable shoe 3 is clamped between the screw 13 and the power terminal 2. A first cover 14 is provided, which covers the screw opening 12. The first cover 14 is removably attached to the clamp section 4.

The clamp section 4 further comprises a terminal opening 15 opposing the screw opening 12 for the insertion of the power terminal 2 into the clamp volume 6. The terminal housing 1 comprises a cover sealing receptacle 16 for receiving a cover sealing element 17 for sealing the clamp volume 6 to the outside, the cover sealing receptacle 16 is delimited by the clamp section 7 and the first cover 14. For this purpose, the cover 14 comprises a section 18 extending into the clamp volume 6. The section 18 can be in the form of a collar, preferably a cylindrical collar 18. The collar 18 has a groove 19 which delimits the sealing receptacle.

According to the invention the cover 14 is attached to the clamp section 4 via a snap fit connection 20. The snap-fit connection is a connection via interlocking parts of the cover 14 and the clamp section 4 or the cable section 7. The snap-fit connection 20 is in the form of a cantilever snap-fit, whereby in the embodiment show an elastically deformable cantilever arm 22 is provided on the cover 14. The elastically deformable cantilever arm 22 could however also be formed on the clamp section 4 or on the cable section 7. By using a snap fit connection 20 with a cantilever arm 22, the connection of the cover to the clamp section is not achieved solely by a form fit connection, and the cantilever arm enables repeated attaching and removing of the cover whilst minimizing damage to the sealing parts of the cover 14. The cover 14 can be also attached to the clamp section 4 without a form fit connection. It is only important that there is sufficient sealing between the cover 14 and the clamp section 4 in order to seal the clamp volume 6 from the outside. The cover 14 can be attached to the clamp section by pressing in the axial direction 5, and can be removed for example by using a tool to disengage the snap fit.

In the embodiment shown, the snap fit connection 20 is provided by a first projection 21 on the cover 14 which extends away from the clamp section 4 transversely or inclined to the axial direction 5, and which has two resilient cantilever arms 22 connected at one end to the first projection 21. The two resilient cantilever arms 22 extend perpendicular from first projection 21 in the axial direction 5 and each comprise a protrusion 23 at their free end, which extends into a complementary recess 24 or opening provided on the clamp section 4 or on the cable section 7. The resilient cantilever arms 22 deform elastically when the snap fit engages or is disengaged. The snap fit connection 20 is thus located away from the sealing area of the cover such that damage to the sealing area is avoided.

The cover 14 can further comprise at least one reinforcing rib extending along a surface of the first projection 21 opposing the cantilever arms 22.

In the embodiment shown, the protrusions 23 at the free ends of the cantilever arms 22 are facing each other and each extends into a respective complementary recess or opening 24 provided on the clamp section 4 or on the cable section 7. The protrusions 23 have a first stop surface 25 which extends in a plane extending perpendicularly to the axial direction 5 and engages with an opposing parallel second stop surface 26 of the recess or opening 24. In this arrangement the resilient arms 22 must be pushed apart using a tool to disengage the snap fit, thus making the attachment more secure preventing inadvertent removal of the cover. The protrusions 23 can be tapered to aid deflection of the cantilever arms 22 when engaging the snap fit.

A second projection 27 is provided on the cover 14 which extends away from the clamp section 4 transversely or inclined to the axial direction 5. The second projection 27 is arranged on an opposite side of the cover 14 to the first projection 21, wherein the second projection 27 extends into a complementary opening 28 or recess provided on the clamp section 4. The second projection 27 aids locating the cover 14 into the clamp section 4, and provides a more secure attachment of the cover 14. The second projection 27 can be snap-fitted in the complementary opening 28 or recess provided on the clamp section 14.

The terminal housing 1 further comprises a cable sealing receptacle 29 within the cable volume 9, for receiving a cable sealing element 30 for sealing the cable volume 9 to the outside. The cable sealing receptacle 29 is delimited by the cable section 7 and is arranged in the region of the outer opening 11. In particular the cable section 7 comprises a radial enlargement in the region of the outer opening 11, which delimits the cable sealing receptacle 29. The cable sealing element 30 is a generally cylindrical rubber part with sealing fins.

The terminal housing 1 also has a terminal sealing receptacle 31 (see figure 2) arranged in the region of the terminal opening 15 for receiving a terminal sealing element 32 for sealing the clamp volume 9 to the outside. The terminal sealing receptacle 31 is delimited by a groove that is open on the side averted from the clamp volume 9.

The cable shoe comprises a base 35 and a sleeve 34. The sleeve 34 receives an end of the cable 8, and the base 35 extends from the sleeve 34 and has an opening for attachment to the power terminal 2 via the screw 13. The cable volume 6 decreases towards the inner opening 10 such that the base 35 of the cable shoe 3 is guided into the clamp volume 6 through the inner opening 10.

The terminal housing 1 further comprises a second cover 36 arranged at the outer opening 11 for fixing the cable 8 to the terminal housing 1. The second cover 36 is snap-fitted onto the terminal housing 1, preferably by the engagement of at least one protrusion on the terminal housing 1 into an opening a collar of the second cover 36, such that the second cover 36 is removably attached to the cable section 7.

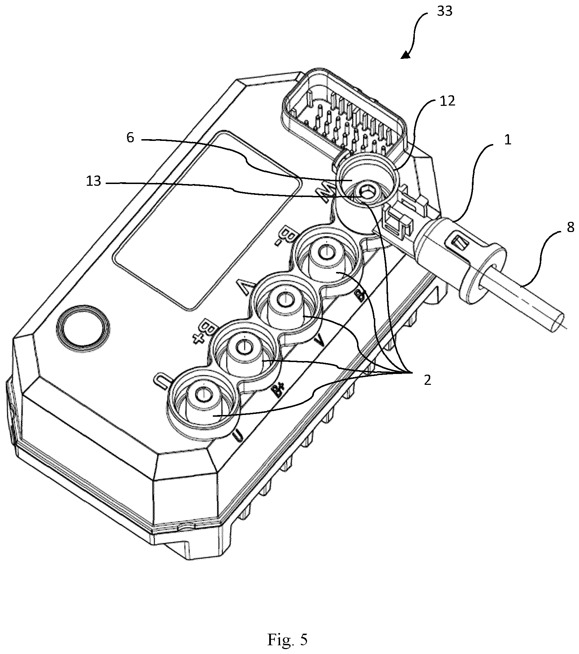

Figure 5 shows a motor controller 33 which is provided with a terminal housing 1 according to the invention. The motor controller 33 comprises five axially projecting power terminals 2. One of the power terminals 2 projects axially into the clamp section 4 of the terminal housing 1 through the terminal opening 15. A cable 8 with a cable shoe 3 extends into the terminal housing 1 through the outer opening 11, such that the cable shoe 3 is arranged in the clamp volume 6 on the side of the power terminal 2 facing the screw opening 12. The screw 13 extends through the cable shoe 3 into the power terminal, such that the cable shoe 3 is clamped between the screw 13 and the power terminal 2.

### LIST OF REFERENCE NUMERALS

1. Terminal housing
2. Power terminal
3. Cable shoe
4. Clamp section
5. Axial direction
6. Clamp volume
7. Cable section
8. Cable
9. Cable volume
10. Inner opening
11. Outer opening
12. Screw opening
13. Screw
14. First cover
15. Terminal opening
16. Cover sealing receptacle
17. Cover sealing element
18. Collar
19. Groove
20. Snap fit connection
21. First projection
22. Cantilever arm(s)
23. Protrusion
24. Opening
25. First stop surface
26. Second stop surface
27. Second projection
28. Opening
29. Cable sealing receptacle
30. Cable sealing element
31. Terminal sealing receptacle
32. Terminal sealing element
33. Motor controller
34. Sleeve
35. Base
36. Second cover
37. Clamp section wall
38. Reinforcing rib

## Claims

1. Terminal housing (1) for housing a power terminal (2) and a cable shoe (3) connected to the power terminal (2),
- with a clamp section (4), which runs in an axial direction (5) and a circumferential direction and comprises a clamp section wall (37) which delimits a clamp volume (6) for housing the power terminal (2) and the cable shoe (3),
- with a cable section (7) for the insertion of a cable (8) connected to the cable shoe (3),
- wherein the cable section (7) projects from the clamp section (4) in a direction transverse or inclined to the axial direction (5) and delimits a cable volume (9),
- wherein the cable section (7), for the insertion of the cable shoe (3) into the clamp volume (6), comprises an inner opening (10) and, for the insertion of the cable (8) into the cable section (7), an outer opening (11) opposing the inner opening (10),
- wherein the clamp section (4), for the insertion of a screw (13) into the clamp volume (6), comprises a screw opening (12) spaced from the cable section (7) and open in the axial direction (5),
- with a first cover (14), which removably covers the screw opening (12),
- wherein the clamp section (4), for the insertion of the power terminal (2) into the clamp volume (6), comprises a terminal opening (15) opposing the screw opening (12),
- wherein the terminal housing (1), for receiving a cover sealing element (17) for sealing the clamp volume (6) to the outside, comprises a cover sealing receptacle (16), which is delimited by the clamp section (4) and the first cover (14),
- wherein the first cover (14) is attached to the clamp section (4) via at least one snap fit connection (20),
- the snap fit connection (20) being provided by at least one resilient cantilever arm (22) which extends from the cover (14), and comprises a protrusion (23) at its free end, which extends into a complementary recess or opening (24) provided on the clamp section (4) or on the cable section (7), or the snap fit connection (20) being provided by at least one resilient cantilever arm (22) which extends from the clamp section (4) or from the cable section (7) and extends into a complementary recess or opening (24) provided on the cover (14).

2. Terminal housing (1) according to claim 1, **characterized in that** the recess or opening (24) is arranged spaced from the clamp section wall (37).

3. Terminal housing (1) according to claim 1, **characterized in that** the first cover (14) comprises a first projection (21) which extends away from the clamp section (4) transversely or inclined to the axial direction (5), and one of the at least one resilient cantilever arms (22) is connected at one end to the first projection (21) and extends perpendicular therefrom in the axial direction (5) and comprises the protrusion (23) at its free end, which extends into the complementary recess or opening (24) provided on the clamp section (4) or on the cable section (7).

4. Terminal housing (1) according to claim 3, **characterized in that** a second projection (27) is provided on the cover (14) which extends away from the clamp section (4) transversely or inclined to the axial direction (5) and is arranged on an opposite side of the cover (14) to the first projection (21), wherein the second projection (27) extends into a complementary opening (28) or recess provided on the clamp section (4).

5. Terminal housing according to claim 4, **characterized in that** the second projection (27) is snap-fitted in the complementary opening or recess (28) provided on the clamp section (4).

6. Terminal housing (1) according to claim 3 or 4, **characterized in that** two such resilient cantilever arms (22) are provided, the protrusions (23) at the free ends of the cantilever arms (22) facing each other and each extending into a respective complementary recess or opening (24) provided on the clamp section (4) or on the cable section (7).

7. Terminal housing (1) according to claim 6, **characterized in that** the protrusions (23) have a first stop surface (25) which extends in a plane extending perpendicularly to the axial direction (5) and engages with an opposing parallel second stop surface (26) of the recess or opening (24).

8. Terminal housing (1) according to one of the preceding claims wherein the terminal housing (1) comprises a cable sealing receptacle (29) within the cable volume (6), for receiving a cable sealing element (30) for sealing the cable volume (9) to the outside, the cable sealing receptacle (29) is delimited by the cable section (7) and arranged in the region of the outer opening (11).

9. Terminal housing (1) according to one of the preceding claims, **characterized in that** the terminal housing (1) comprises a terminal sealing receptacle (31) arranged in the region of the terminal opening (15) for receiving a terminal sealing element (32) for sealing the clamp volume (6) to the outside.

10. Terminal housing (1) according to claim 9, **characterized in that** the terminal housing (1) comprises a groove (31) that is open on the side averted from the clamp volume (6) and delimits the terminal sealing receptacle (31).

11. Terminal housing (1) according to one of the preceding claims, **characterized in that** first cover (14) comprises a cylindrical section extending into the clamp volume (6) having a groove (19) which delimits the cover sealing receptacle (16).

12. Terminal housing (1) according to claim 3, **characterized in that** the first cover (14) comprises at least one reinforcing rib (38) extending along a surface of the first projection opposing the cantilever arm (22).

13. A motor controller (33) with a terminal housing (1) according to one of claims 1 to 12,
- wherein the motor controller (33) comprises an axially projecting power terminal (2),
- wherein the power terminal (2) projects axially into the clamp section (4) of the terminal housing (1) through the terminal opening (15),
- wherein a cable (8) having a cable shoe (3) extends into the terminal housing (1) through the outer opening (11), such that the cable shoe (3) is arranged in the clamp volume (6) on the side of the power terminal (2) facing the screw opening (12),
- wherein a screw (13) extends through the cable shoe (3) into the power terminal (2), such that the cable shoe (3) is clamped between the screw (13) and the power terminal (2).
